# EUROPEAN PATENT SPECIFICATION

(11) **EP 3 884 436 B1**
(45) Date of publication and mention of the grant of the patent: **23.09.2026**
(21) Application number: 20714740.6
(22) Date of filing: 19.02.2020
(51) Int. Cl.: G06N 3/08, G06N 3/006, G06N 3/044, G06N 3/045, G06N 3/047, G06N 3/0464

(54) **CONTROLLING AGENTS USING LATENT PLANS**
STEUERUNGSMITTEL UNTER VERWENDUNG VON LATENTEN PLÄNEN
CONTRÔLE D'AGENTS À L'AIDE DE PLANS LATENTS

(30) Priority: 19.02.2019 US 201962807740 P
(43) Date of publication of application: 29.09.2021
(73) Proprietor: Google LLC, Mountain View, CA 94043 (US)
(72) Inventor: SERMANET, Pierre, Mountain View, CA 94043 (US); ZADEH, Seyed Mohammad Khansari, Mountain View, CA 94043 (US); LYNCH, Harrison Corey, Mountain View, CA 94043 (US)
(74) Representative: Kennedy, Richard E.
(86) International application number: PCT/US2020/018888
(87) International publication number: WO 2020/172322

(56) References cited:
- WO-A1-2018/071392
- WO-A1-2018/083532
- TIANHE YU ET AL: "Unsupervised Visuomotor Control through Distributional Planning Networks", ARXIV.ORG, CORNELL UNIVERSITY LIBRARY, 201 OLIN LIBRARY CORNELL UNIVERSITY ITHACA, NY 14853, 14 February 2019 (2019-02-14), XP081029316
- THAM C K ED - FERRÁNDEZ JOSÉ MANUEL ET AL: "Reinforcement learning of multiple tasks using a hierarchical CMAC architecture", ROBOTICS AND AUTONOMOUS SYSTEMS, ELSEVIER BV, AMSTERDAM, NL, vol. 15, no. 4, 1 October 1995 (1995-10-01), pages 247 - 274, XP004001928, ISSN: 0921-8890, DOI: 10.1016/0921-8890(95)00005-Z

## Description

### BACKGROUND

This specification relates to controlling agents, e.g., robots, to perform particular tasks.

Generally, an agent interacts with an environment by performing actions that are selected by a control system for the agent in response to receiving observations that characterize the current state of the environment.

WO 2018/083532 A1 describes methods, systems, and apparatus including computer programs encoded on a computer storage medium, for training an action selection neural network. One of the methods includes maintaining a replay memory that stores trajectories generated as a result of interaction of an agent with an environment; and training an action selection neural network having policy parameters on the trajectories in the replay memory, where training the action selection neural network comprises: sampling a trajectory from the replay memory; and adjusting current values of the policy parameters by training the action selection neural network on the trajectory using an off-policy actor critic reinforcement learning technique. Some systems select the action to be performed by the agent in response to receiving a given observation in accordance with an output of a neural network. TIANHE YU ET AL: "Unsupervised Visuomotor Control through Distributional Planning Networks", ARXIV.ORG, CORNELL UNIVERSITY LIBRARY, 201 OLIN LIBRARY CORNELL UNIVERSITY ITHACA, NY 14853, 14 February 2019 describes learning effective and control-centric representations that lead to more autonomous reinforcement learning algorithms.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

### SUMMARY

In a first aspect, there is provided a computer-implemented method of controlling an agent interacting with an environment to perform a task as set forth in claim 1. In a second aspect there is provided a computer-implemented method of training a plan proposal neural network and a policy neural network for controlling an agent of the first aspect as set forth in claim 7. In a third aspect, there is provided one or more computer storage media as set forth in claim 11. In a fourth aspect, there is provided a system as set forth in claim 12. In a fifth aspect, there is provided a computer program as set forth in claim 13. This specification describes a system implemented as one or more computer programs on one or more computers in one or more locations that controls an agent interacting with an environment to cause the agent to perform a task using latent plans selected from a latent plan space. In particular, the system generates the latent plan using a goal observation that characterizes a state that the environment should reach in order for the task to be completed successfully.

Particular embodiments of the subject matter described in this specification can be implemented so as to realize one or more of the following advantages.

This specification describes a goal-conditioned model learned from self-supervised data that can effectively be used to control an agent, e.g., a robot, to perform arbitrary tasks, including tasks that were not performed in the training data for the agent. In particular, a user provides data specifying a goal state and a single policy outputs the actions to reach that state based on its experience during acting in the environment. This means that this single policy can be reused in a zero shot manner to solve new tasks. In particular, by making use of a latent state space and selecting latent plans from this space, the described systems can control an agent to achieve high performance even on tasks that were not performed in the training data. Additionally, the policy can be used to solve arbitrary goals in an environment, which provides flexibility and robustness, which is critical in settings where tasks change faster than they can be engineered. The described models are far more robust to perturbation than models trained solely on positive demonstrations, and exhibit natural failure recovery despite not being trained explicitly to do so. Because the model is learned from self-supervised data, the system does not need any labeled data (which can be difficult or computationally intensive to obtain) in order to effectively leam the model.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example control system.
FIG. 2 is a flow diagram of an example process for controlling the agent.
FIG. 3 shows an example training system.
FIG. 4 is a flow diagram of an example process for training the neural networks.
FIG. 5 is a graphical representation of a latent plan space that can be generated as a result of training the neural networks.

Like reference numbers and designations in the various drawings indicate like elements.

### DETAILED DESCRIPTION

In broad terms this specification describes a control system that controls an agent interacting with an environment, e.g., a robot, by selecting actions to be performed by the agent and then causing the agent to perform the selected action. In order for the agent to interact with the environment, the system receives data characterizing the current state of the environment and selects an action to be performed by the agent in response to the received data. Data characterizing a state of the environment is referred to in this specification as an observation.

In some implementations, the environment is a real-world environment and the agent is a mechanical agent interacting with the real-world environment. For example, the agent may be a robot interacting with the environment to accomplish a specific task, e.g., to locate an object of interest in the environment or to move an object of interest to a specified location in the environment or to navigate to a specified destination in the environment; or the agent may be an autonomous or semi-autonomous land or air or sea vehicle navigating through the environment.

In these implementations, the observations may include, for example, one or more of images, object position data, or sensor data captured as the agent interacts with the environment, for example sensor data from an image, distance, or position sensor or from an actuator.

For example in the case of a robot the observations may include data characterizing the current state of the robot, e.g., one or more of: joint position, joint velocity, joint force, torque or acceleration, for example gravity-compensated torque feedback, or global or relative pose of an item held by the robot.

In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations.

The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In the case of an electronic agent the observations may include data from one or more sensors monitoring part of a plant or service facility such as current, voltage, power, temperature and other sensors and/or electronic signals representing the functioning of electronic and/or mechanical items of equipment.

In these implementations, the actions may be control inputs to control the robot, e.g., torques for the joints of the robot or higher-level control commands, or the autonomous or semi-autonomous land or air or sea vehicle, e.g., torques to the control surface or other control elements of the vehicle or higher-level control commands.

In other words, the actions can include for example, position, velocity, or force/torque/acceleration data for one or more joints of a robot or parts of another mechanical agent. Action data may additionally or alternatively include electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation e.g. steering, and movement e.g., braking and/or acceleration of the vehicle.

In some implementations the environment is a simulated environment and the agent is implemented as one or more computers interacting with the simulated environment.

For example the simulated environment may be a simulation of a robot or vehicle and one or more neural networks used by the control system may be trained on the simulation. For example, the simulated environment may be a motion simulation environment, e.g., a driving simulation or a flight simulation, and the agent is a simulated vehicle navigating through the motion simulation. In these implementations, the actions may be control inputs to control the simulated user or simulated vehicle. Once the neural networks have been trained in simulation, they may be used to control a real-world agent as described above.

In another example, the simulated environment may be a video game and the agent may be a simulated user playing the video game.

In a further example the environment may be a protein folding environment such that each state is a respective state of a protein chain and the agent is a computer system for determining how to fold the protein chain. In this example, the actions are possible folding actions for folding the protein chain and the result to be achieved may include, e.g., folding the protein so that the protein is stable and so that it achieves a particular biological function. As another example, the agent may be a mechanical agent that performs or controls the protein folding actions selected by the system automatically without human interaction. The observations may include direct or indirect observations of a state of the protein and/or may be derived from simulation.

In a similar way the environment may be a drug design environment such that each state is a respective state of a potential pharma chemical drug and the agent is a computer system for determining elements of the pharma chemical drug and/or a synthetic pathway for the pharma chemical drug. The drug/synthesis may be designed based on a reward derived from a target for the drug, for example in simulation. As another example, the agent may be a mechanical agent that performs or controls synthesis of the drug.

Generally in the case of a simulated environment the observations may include simulated versions of one or more of the previously described observations or types of observations and the actions may include simulated versions of one or more of the previously described actions or types of actions.

In some other applications the agent may control actions in a real-world environment including items of equipment, for example in a data center or grid mains power or water distribution system, or in a manufacturing plant or service facility. The observations may then relate to operation of the plant or facility. For example the observations may include observations of power or water usage by equipment, or observations of power generation or distribution control, or observations of usage of a resource or of waste production. The agent may control actions in the environment to increase efficiency, for example by reducing resource usage, and/or reduce the environmental impact of operations in the environment, for example by reducing waste. The actions may include actions controlling or imposing operating conditions on items of equipment of the plant/facility, and/or actions that result in changes to settings in the operation of the plant/facility e.g. to adjust or turn on/off components of the plant/facility.

Optionally, in any of the above implementations, the observation at any given time step may include data from a previous time step that may be beneficial in characterizing the environment, e.g., the action performed at the previous time step, the reward received at the previous time step, and so on.

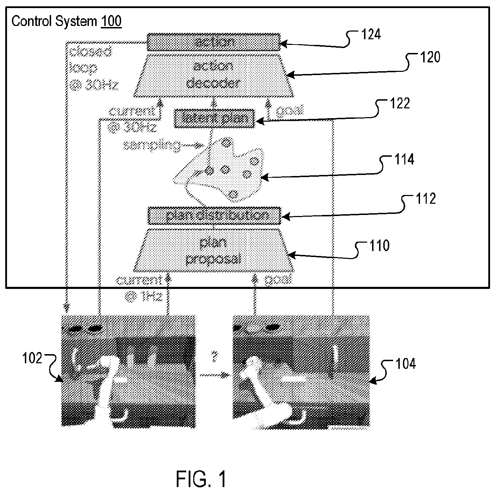

FIG. 1 shows an example control system 100. The control system 100 is an example of a system implemented as computer programs on one or more computers in one or more locations in which the systems, components, and techniques described below are implemented.

The control system 100 controls an agent interacting with an environment, i.e., as described above, using a neural network system in order to cause the agent to perform a specified task that requires the agent to reach a target state in the environment. For example, when the agent is a robot or other mechanical agent, the task may be an industrial robotic task that involves navigating in the environment, i.e., reaching a state that represents a particular location in the environment, moving objects in the environment, i.e., reaching a state in which an object is in a specified location, or both. When the agent is controlling an industrial facility, the task may be to control the facility to achieve certain performance requirements, e.g., to reach a state of the facility that has a certain energy efficiency or power consumption.

In particular, to control the agent, the system 100 uses a plan proposal neural network 110 (the parameters of which are referred to as "plan proposal parameters") and a policy neural network 120 (the parameters of which are referred to as "policy parameters").

The plan proposal neural network 110 is configured to receive as input a (i) current observation 102 characterizing a current state of the environment and (ii) a goal observation 104 characterizing a goal state of the environment that results in the agent successfully performing the task and to process the input to generate data defining a probability distribution 112 over a space of latent plans 114.

In some cases, the current observation 102 includes more information than the goal observation 104. For example, in some implementations, the current observation 102 includes both an image of the state of the environment and proprioceptive data or other measurement data characterizing the agent or other data at the time that the image is taken. In these implementations, the goal observation 104 can include only an image of the goal state of the environment.

Each latent plan is an ordered collection of numeric values, e.g., a vector, in a space of pre-determined dimensionality (the "space of latent plans").

In some implementations, the data defining the probability distribution over the space of latent plans are a mean and a variance of a multi-variate distribution, i.e., a distribution that, when sampled from, results in a vector in the space of latent plans 114.

The plan proposal neural network 110 can have any appropriate architecture that allows the neural network to map two observations to data defining a probability distribution.

As one example, the plan proposal neural network 110 can include an encoder subnetwork that maps each observation to a respective encoded representation. When the observations include multiple channels, e.g., multiple different types of data, the encoder subnetwork can map each channel of data to a respective encoded representation and then concatenate the resulting encoded representations to generate the final encoded representation of the observation.

As a particular example, when one of the channels is an image channel, the encoder subnetwork can map the image data to an encoded vector using a convolutional neural network. As another example, when one of the channels is lower-dimensional proprioceptive data, e.g., position and orientation of the agent or various components of the agent, the encoder subnetwork can either use a vector of the proprioceptive data directly as the encoded representation of the channel or can process the proprioceptive data through one or more fully-connected layers to generate the representation.

The plan proposal neural network 110 can then concatenate the representations of the observations to generate a combined representation and process the combined representation through a multi-layer perceptron (MLP) to generate the parameters of the probability distribution over the latent plan space 114. In other words, in this example, the plan proposal neural network 110 is a feedforward neural network that first encodes the observations and then generates the data defining the probability distribution from the encoded observations.

While this specification generally describes implementations where the latent plan space 114 is continuous and the output of the plan proposal neural network 110 defines a probability distribution, in other implementations, the latent space 114 is discrete, i.e., includes a set number of vectors, and the output of the plan proposal neural network 110 is a vector that has the same dimensionality as the vectors in the space of latent plans 114. In these implementations, when selecting a latent plan from the space, the system 100 can select the closest latent plan to the output of the plan proposal neural network 110.

As will be described in more detail below, because of the way the networks are configured and trained, each latent plan represents a different path through the environment or a different action selection constraint to be imposed on the policy neural network 120.

The policy neural network 120 (also referred to as an "action decoder" neural network) is configured to receive a policy input that includes (i) the current observation 102, (ii) the goal observation 104, and (iii) a latent plan 122 selected from the space of latent plans 114 and to process the policy input to generate an action output that defines an action 124 to be performed in response to the current observation 102.

For example, the action output may define a probability distribution over a set of possible actions that can be performed by the agent, i.e., the action output may be a respective probability for each of the set of possible actions or may be the parameters of the probability distribution over the set of possible actions. In this example, the action defined by the action output is an action that has the highest probability according to the probability distribution or an action that is generated by sampling from the probability distribution.

As another example, the action output may directly identify the action to be performed, i.e., the action output may be a point in a multi-dimensional action space.

The policy neural network 120 can have any architecture that is appropriate to map the observations and the latent plan to an action selection output. As one example, the policy neural network 120 can be a recurrent neural network that conditions the current action selection output on processing performed for previous observations.

In this example, the policy neural network 120 can share the encoder subnetwork with the plan proposal neural network 110, i.e., can also encode the observations into respective encoded observations. The policy neural network 120 can then concatenate the encoded observations and the latent plan to generate a combined input and then process the combined input through one or more recurrent neural network layers, e.g., vanilla recurrent neural network (RNN) or long-short term memory (LSTM) layers, to update the hidden state of the recurrent layers. The policy neural network 120 can then use the updated hidden state to generate the action selection output, e.g., by passing the updated hidden state through one or more fully-connected layers that generate the parameters of a probability distribution over possible actions. In one example, the action selection output can be the parameters of a Mixture of discretized logistics (MODL) distribution over the possible actions.

To select an action to be performed by the agent in response to the current observation 102, the system 100 processes the current observation 102 and the goal observation 104 using the plan proposal neural network 110 to generate data defining a probability distribution 112 over the space of latent plans 114 and selects, using the probability distribution, a latent plan 122 from the space of latent plans 114. For example, the system 100 can sample a latent plan in accordance with the probability distribution.

The system 100 then processes a policy input including (i) the current observation 102, (ii) the goal observation 104, and (iii) the selected latent plan 122 using the policy neural network 120 to generate a current action output that defines an action 124 to be performed in response to the current observation. The system 100 then causes the agent to perform the action 124 defined by current the action output, i.e., by instructing the agent to perform the action or otherwise transmitting a command to the agent.

In some cases, the system 100 selects a new latent plan only at the beginning of an attempt to perform a task, i.e., only for the initial state of the environment at the beginning of an episode of the task. In these cases, when the current observation is not the observation characterizing the initial state of the environment, the system does not use the plan proposal neural network 110 when selecting the action to be performed by the agent in response to the current observation and instead reuses the plan 122 that was sampled in response to the observation characterizing the initial state of the environment.

In some other cases not encompassed by the wording of the claims, the system 100 selects a new latent plan in response to each observation that is received while the agent is performing the task. In these cases, the system samples a new latent plan 122 in response to each received observation as received above.

The system 100 selects a new latent plan in response to only a proper subset of the observations received while the agent is performing the task. The system may select a new latent plan for every n-th observation, where *n* is an integer greater than one, e.g., five, ten, twenty, thirty, or fifty or the system may select a new latent plan every k milliseconds while the agent is performing the task, e.g., 100, 500, 1000, or 10000 milliseconds. When an observation is received and the criteria for selecting a new latent plan have not yet been satisfied, the system 100 does not use the plan neural network 110 and instead selects the action to be performed in response to the observation using the most-recently selected latent plan 122.

In the particular example of FIG. 1, actions are selected at a frequency of 30 Hz while, due to the criteria only being satisfied for a proper subset of observations, new latent plans are generated at a frequency of only 1 Hz. Thus, the system 100 makes multiple action selections while conditioned on the same latent plan. However, the system can still recover from failures by generating a new latent plan once every second. That is, even if the previous latent plan that was used during the previous second was ineffective, the system 100 can generate a new plan at the next second to nonetheless complete the task.

In order to allow the neural networks to be used to effectively control the agent, the system 100 or another system trains the plan proposal neural network 110 and the policy neural network 120 to allow these neural networks to be used to effectively control the agent to perform a variety of user-specified tasks, i.e., tasks that are specified by providing data defining a goal observation that characterizes a goal state that needs to be reached in order for the task to be completed.

A user of the system 100 can provide the data specifying the goal observation in any of a variety of ways. For example, the system 100 can provide, for presentation on a user device or other computer, a user interface that allows the user to submit an input defining a goal state, e.g., when the agent is a robot to select a location in the environment that should be reached by the robot or to select an object in the environment that should be located or moved by the robot or to submit another appropriate input that provides sufficient information to generate the goal observation. The system 100 can then generate the goal observation, e.g., by generating an image of the target state of the environment.

In particular, without making use of the latent plan space, a challenge that would be faced by the system is the fact that there are many valid high-level behaviors that might connect the same current observation - goal observation pair. This presents multiple counteracting action label trajectories, i.e., the training data might include trajectories in which the same task is successfully accomplished using many different sequences of high-level behaviors. This can impede learning and prevent the policy neural network 120 from being used to effectively control the agent.

By making use of the latent plan space, however, the policy neural network 120 can be provided with a high-level plan on which the policy neural network 120 can condition action selection. In particular, by training the plan proposal neural network 110 so that the selected latent plan encodes a single one of the multiple high-level behaviors that could result in the task being successfully performed, the policy neural network 120 can generate action sequences that perform the high-level behavior encoded by the input latent plan in order to cause the agent to complete the task.

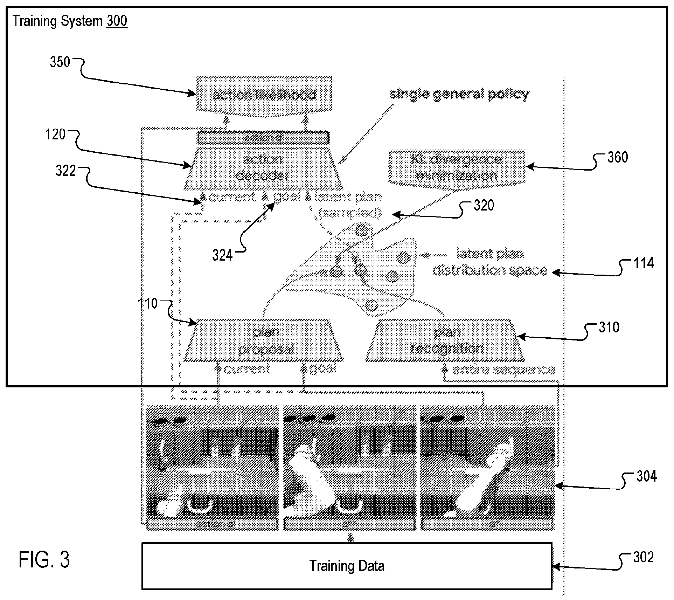

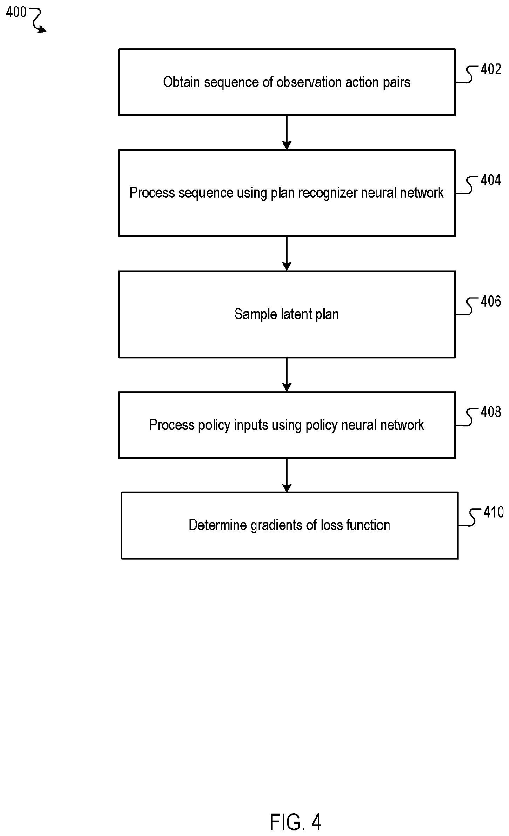

Training the neural networks is described in more detail below with reference to FIGS. 3 and 4.

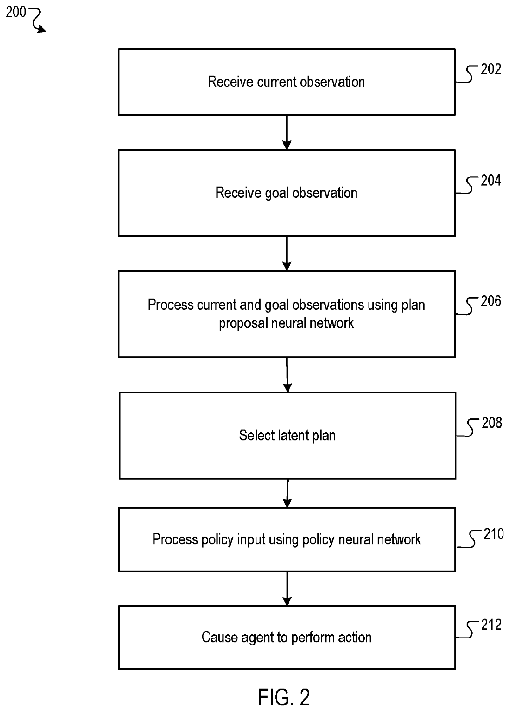

FIG. 2 is a flow diagram of an example process 200 for controlling an agent. For convenience, the process 200 will be described as being performed by a system of one or more computers located in one or more locations. For example, a control system, e.g., the control system 100 of FIG. 1, appropriately programmed, can perform the process 200.

The system can repeatedly perform the process 200 in response to received observations in order to cause the agent to complete the specified task, i.e., the task that is completed when the environment reaches the goal state that is characterized by the goal observation.

The system receives a current observation characterizing a current state of the environment being interacted with by the agent (step 202).

In some implementations, the system then determines whether criteria for selecting a new latent plan are satisfied when the current observation is received.

In particular, as described above, in some implementations not encompassed by the wording of the claims, the system selects a new latent plan at every time step. In these implementations, the system does not need to check whether the criteria are satisfied, i.e., because the criteria are satisfied at every time step.

In other implementations, the system selects a new latent plan at only a proper subset of observations.

In some of these implementations, the system selects a latent plan at only the first time step in a given task episode. In these implementations, the system determines that the criteria are satisfied only when the observation is the first observation in an attempt to perform the task.

The system selects a new latent plan for every *n*-th observation, where n is an integer greater than one.

Thus, in these implementations, the system determines that the criteria are satisfied only at every n-th observation.

Or system selects a new latent plan every k milliseconds while the agent is performing the task. Thus, in these implementations, the system determines that the criteria are satisfied only when at least *k* milliseconds have elapsed since the last time that a new latent plan was selected.

The system receives a goal observation characterizing a goal state of the environment that results in the agent successfully performing the task (step 204). For example, before the task episode begins, the system may receive an input from a user of the system specifying the goal state and generate an observation characterizing the goal state. For example, the system may present a user interface that allows the user to select from a plurality of different goal states.

When the criteria have been satisfied, the system processes the current observation and the goal observation using the plan proposal neural network to generate data defining a probability distribution over the space of latent plans (step 206) and selects, using the probability distribution, a latent plan from the space of latent plans (step 208).

The system then processes a policy input that includes (i) the current observation, (ii) the goal observation, and (iii) the selected latent plan using the policy neural network to generate a current action output that defines an action to be performed in response to the current observation (step 210).

In response to determining that the criteria have not been satisfied, the system does not use the plan proposal neural network and when performing step 208 instead processes a policy input that includes (i) the observation, (ii) the goal observation, and (iii) the most recently selected latent plan using the policy neural network. That is, the system does not use the plan proposal neural network to generate a new latent plan and instead uses the most recently selected latent plan, i.e., the latent plan that was selected the most recent time that the criteria were satisfied.

The system then causes the agent to perform the action defined by current the action output (step 212).

FIG. 3 shows an example training system 300. The training system 300 can be the same as the control system 100 or can be a different system implemented as computer programs on one or more computers in one or more locations in which the systems, components, and techniques described below are implemented.

The system 300 trains the plan proposal neural network 110 and the policy neural network 120 jointly with a plan recognizer neural network 310.

The plan recognizer neural network 310 is a neural network that has parameters (referred to in this specification as "plan recognizer parameters") and that is configured to receive as input a sequence of observation action pairs 304 and to process at least the observations in the the sequence of observation action pairs to generate data defining a probability distribution over the space of latent plans 114. In other words, the plan recognizer neural network 310 receives as input a sequence 304 that includes a sequence of observations starting from an initial observation and ending with a final observation. In some implementations, for each observation other than the final observation, the sequence also includes an action that was performed by the agent or by another, similar agent that caused the environment to transition from the state characterized by the observation to the state characterized by the next observation in the sequence. In other implementations, the plan recognizer processes only the observations and as described above the observations can include the most recent action that was performed before the observation was received.

Like the output of the plan proposal neural network 110, the data defining the probability distribution can also be the parameters of the probability distribution, e.g., the means and variances of a multi-variate distribution over the latent plan space 114.

The plan recognizer neural network 310 can have any appropriate architecture that allows the neural network to map the sequence to data defining the probability distribution. For example, the plan recognizer neural network 310 can be a recurrent neural network that processes each of the observations in sequence. As a particular example, the plan recognizer neural network 310 can generate a respective encoded representation of each observation in the sequence using the encoder subnetwork. The plan recognizer neural network 310 can then process the encoded representations using one or more recurrent neural network layers, e.g., vanilla RNN or LSTM layers, to generate an updated hidden state and process the updated hidden state, i.e., the hidden state after the last observation in the sequence, using one or more fully connected layers to generate the parameters of the probability distribution. In some implementations, the plan recognizer neural network 310 is a bi-directional recurrent neural network and the one or more recurrent neural network layers are bi-directional recurrent layers.

In particular, the system 300 trains the neural networks 110, 120, and 310 on training data 302 that includes multiple such sequences 304. For example, the sequences 304 may have been generated from interactions of the agent or of a different agent while under the control of a different control policy, i.e., while the agent was not being controlled based on outputs from the policy neural network 120. The different control policy may be, e.g., a fixed, hard-coded control policy, a different machine-learned control policy, or through teleoperation or other manner of control by a user that attempts to control the agent such that the agent performs various different tasks in the environment.

Advantageously, the system 300 does not require that the sequences 304 in the training data 302 be labelled in any way in order for the system 300 to use the sequences 304 to effectively train the neural networks 110, 120, and 310. Thus, the system 300 can leam an effective control policy for the agent entirely on self-supervised data.

To train the neural networks on a sequence 304, the system 300 processes the sequence 304 using the plan recognizer neural network 310 and in accordance with current values of the plurality of plan recognizer parameters to generate first data defining a first probability distribution over the space of latent plans 114.

The system 300 then processes the first observation in the sequence and the last observation in the sequence using the plan proposal neural network 110 and in accordance with current values of the plan proposal parameters to generate a second probability distribution over the space of latent plans 114. Thus, the plan recognizer neural network 310 is provided an entire sequence of observations while the plan proposal neural network 110 is provided only the first observation in the sequence and the last observation in the sequence, effectively treating the last observation in the sequence as a goal observation.

The system 300 then samples a latent plan 320 from the first probability distribution generated based on the output of the plan recognizer neural network 310, i.e., generated based on the entire sequence 304 of observations and actions.

For each observation action pair in the sequence 304, the system processes an input that includes the observation 322 in the pair, the last observation 324 in the sequence, and the latent plan 320 using the policy neural network 120 and in accordance with current values of the policy parameters to generate an action probability distribution for the pair. Thus, the system 300 generates a respective action probability distribution for each observation action pair in the sequence 304.

The system then updates the values of the parameters of the neural networks by determining a gradient with respect to the policy parameters, the plan recognizer parameters, and the plan proposal parameters of a loss function that includes (i) an action likelihood term 350 that depends on, for each observation action pair, a probability assigned to the action in the observation action pair in the action probability distribution for the observation action pair and (ii) a divergence minimization term 360 that measures a difference between the first probability distribution generated based on the output of the plan recognizer neural network 310 and the second probability distribution generated based on the output of the plan proposal neural network 110.

For example, the loss function can be of the form L1 + B*L2, where L1 is the action likelihood term 350, L2 is the divergence minimization term 360, and B is a constant weight value. In some cases, to prevent posterior collapse, the system sets B to a constant value that is lower than 1.

For example, the divergence minimization term 360 can be the Kullback-Leibler (KL) divergence between the first probability distribution and the second probability distribution.

As another example, the action likelihood term 350 can be a maximum likelihood loss. While the action likelihood term 350 is used when the output of the policy neural network 120 defines a probability distribution over the set of possible actions, when the actions selection output is a different kind of output, the system can use a different type of loss that measures the error between the action selection output and the action in the observation action pair.

By training the neural networks on this loss function, the system 300 trains the plan proposal neural network 110 to generate outputs that are predictive of outputs that are generated by the plan recognizer neural network 310 by processing the entire observation sequence. Thus, the system 300 trains the plan proposal neural network 110 to predict, from only the first and last observation, the types of latent plans that could be followed to result in the state characterized by the last observation being reached. After training, when the input latent plans are selected from probability distributions generated using the outputs of the neural network 110, the selected latent plans will therefore accurately encode one of these latent plans.

At the same time, the system 300 trains the policy neural network 120 to effectively condition on the sampled latent plans to generate action selection outputs that result in the final state characterized by the final observation in the sequence being reached, i.e., that result in the task being successfully completed by performing the high level behavior that is encoded by the sampled latent plan.

FIG. 4 is a flow diagram of an example process 400 for training the plan proposal neural network, the policy neural network, and the plan recognizer neural network on a sequence of observation action pairs. For convenience, the process 400 will be described as being performed by a system of one or more computers located in one or more locations. For example, a control system, e.g., the control system 100 of FIG.1, appropriately programmed, can perform the process 400.

The system can repeatedly perform the process 400 on different sequences of observation inputs to train the neural networks. After the training, the system can make use of only the plan proposal neural network and the policy neural network for controlling the agent, i.e., the plan recognizer neural network is used only to improve the training of the plan proposal neural network and the policy neural network and is not directly used to control the agent after training.

The system obtains a sequence of observation action pairs, e.g., by sampling the sequence from the training data (step 402). The sequence generally includes a set of observation action pairs and a final observation that were generated as a result of interactions of the agent (or another, similar agent) with the environment.

The system processes at least the observations in the sequence of observation action pairs using the plan recognizer neural network and in accordance with current values of the plurality of plan recognizer parameters to generate first data defining a first probability distribution over the space of latent plans (step 404).

The system processes the first observation in the sequence and the last observation in the sequence (and not any of the actions or any of the intermediate observations in the sequence) using the plan proposal neural network and in accordance with current values of the plan proposal parameters to generate a second probability distribution over the space of latent plans (step 406).

The system samples a latent plan from the first probability distribution (step 408), i.e., from the probability distribution that was generated using all of the observations in the sequence.

For each observation action pair in the sequence, the system processes an input that includes the observation in the pair, the last observation in the sequence, and the latent plan using the policy neural network and in accordance with current values of the policy parameters to generate an action probability distribution for the pair (step 410).

The system then determines a gradient with respect to the policy parameters, the plan recognizer parameters, and the plan proposal parameters of a loss function that includes (i) a first term that depends on, for each observation action pair, a probability assigned to the action in the observation action pair in the action probability distribution for the observation action pair and (ii) a second term that measures a difference between the first probability distribution and the second probability distribution (step 412).

The system then uses the gradients to update the current values of the parameters in accordance with an update rule. The update rule can be any appropriate update rule that maps gradients to parameter value updates, e.g., the rmsProp update rule, the Adam optimizer update rule, a learned update rule, or a stochastic gradient descent learning rate based update rule. In some cases, the system first performs the process 400 for multiple different sequences and then averages the gradients for the sequences before applying the update rule to the averaged gradients in order to update the current values.

By repeatedly performing the process 400, the system determines trained values of the plan proposal parameters, the policy parameters, and the plan recognizer parameters. The system (or another system) can then use the trained values of the plan proposal parameters and the policy parameters to control the agent after training.

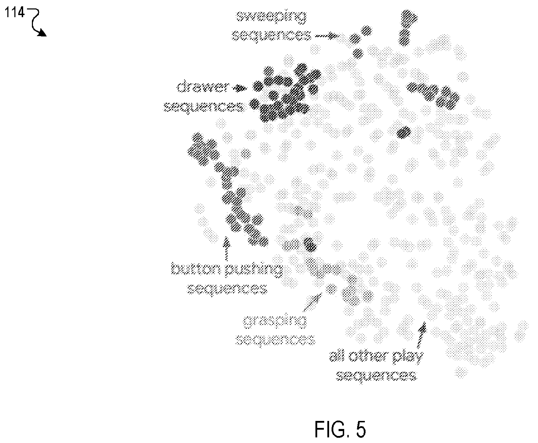

FIG. 5 is a graphical representation of a latent plan space 114 that can be generated as a result of training the neural networks as described above. In particular, in the example of FIG. 5, the neural networks have been trained on training data that includes multiple sequences in which a robot was being controlled to complete various different tasks. FIG. 5 represents each sequence in the training data as a point in the latent plan space, i.e., shows the point in the space that was sampled for each of the training sequences, e.g., based on a probability distribution generated by either the plan proposal neural network or the plan recognition neural network after those networks have been trained.

As can be seen in FIG, 5, different regions of the space correspond to different types of tasks. For example, one region corresponds to grasping sequences (where the agent was caused to grasp one or more objects in the environment), another region corresponds to button pushing sequences (where the agent was caused to push one or more buttons located in the environment), yet another corresponds to drawer sequences (where the agent was caused to manipulate a drawer), and yet another corresponds to sweeping sequences (where the agent was caused to sweep one or more objects off of a surface). Thus, FIG. 5 shows that even though no labels are used in training, the plan recognizer and plan proposal neural networks generate latent plans that effectively embed task information, e.g., as reflected by the functional organization of the latent plan space shown in FIG. 5. This learned functional organization allows the sampled latent plans to be used to effectively condition the policy neural network after training.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

This approach to training an object interaction task neural network can reduce the number of task episodes required to train the neural network and can result in an improved trained neural network without requiring additional supervision for the training process. Training of the object interaction task neural network may therefore require fewer computational resources. An improved trained object interaction task neural network can facilitate improved robotic control.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs. The one or more computer programs can comprise one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, .e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. As one example, the processes depicted in the accompanying figures do not necessarily require the particular order shown, or sequential order, to achieve desirable results. In some cases, multitasking and parallel processing may be advantageous.

## Claims

1. A computer-implemented method of controlling an agent interacting with an environment to perform a task, the method comprising:
receiving (202) a current observation (102) characterizing a current state of the environment;
receiving (204) a goal observation (104) characterizing a goal state of the environment that results in the agent successfully performing the task;
processing (206) the current observation (102) and the goal observation (104) using a trained plan proposal neural network (110) having a plurality of plan proposal parameters and configured to generate data defining a probability distribution (112) over a space of latent plans (114);
selecting (208), using the probability distribution (112), a latent plan from the space of latent plans (114);
processing (210) a policy input comprising (i) the current observation (102), (ii) the goal observation (104), and (iii) the selected latent plan using a trained policy neural network (120) having a plurality of policy parameters and configured to generate a current action output that defines an action (124) to be performed in response to the current observation (102);
causing (212) the agent to perform the action (124) defined by the current action output;
receiving a subsequent observation characterizing a subsequent state of the environment that follows the current state;
determining whether criteria for selecting a new latent plan are not satisfied when the subsequent observation is received;
in response to determining that the criteria for selecting a new latent plan are not satisfied, performing:
processing the policy input comprising (i) the subsequent observation, (ii) the goal observation (104), and (iii) the selected latent plan using the policy neural network (120) to generate a subsequent action output that defines an action to be performed in response to the subsequent observation; and
causing the agent to perform the action defined by the subsequent action output; and
wherein the environment is a real-world environment and the agent is a mechanical agent interacting with the real-world environment; and,
wherein the criteria comprises:
a criteria based on selecting a new latent plan for every n-th observation, where n > 1; or
a criteria based on selecting a new latent plan every k milliseconds while the agent is performing the task.

2. The method of any preceding claim, wherein selecting, using the probability distribution (112), a latent plan from the space of latent plans (114), comprises sampling a latent plan in accordance with the probability distribution (112); and/or optionally, wherein the data defining the probability distribution (112) over the space of latent plans (114) are a mean and a variance of a multi-variate distribution.

3. The method of any preceding claim, wherein the current action output defines a probability distribution over a set of actions that can be performed by the agent.

4. The method of any preceding claim, wherein the plan proposal neural network (110) and the policy neural network (120) have been trained jointly through self-supervised learning.

5. The method of any preceding claim wherein at least one of:
the plan proposal neural network (110) is a feed-forward neural network; or
the plan proposal neural network (110) includes a multi-layer perceptron (MLP).

6. The method of any preceding claim, wherein the policy neural network (120) is a recurrent neural network.

7. A computer-implemented method of training a plan proposal neural network (110) having a plurality of plan proposal parameters and a policy neural network (120) having a plurality of policy parameters jointly with a plan recognizer neural network (310) having a plurality of plan recognizer parameters and configured to receive as input a sequence of observation action pairs (304) and to process the sequence of state action pairs (304) to generate data defining a probability distribution over a space of latent plans (114), the method comprising:
obtaining (402) a sequence of observation action pairs, the sequence of observation action pairs generated as a result of interactions of the agent with the environment;
processing (404) at least the observations in the sequence of observation action pairs using the plan recognizer neural network (310) and in accordance with current values of the plurality of plan recognizer parameters to generate first data defining a first probability distribution over the space of latent plans (114);
processing the first observation in the sequence and the last observation in the sequence using the plan proposal neural network (110) and in accordance with current values of the plan proposal parameters to generate a second probability distribution over the space of latent plans (114);
sampling (406) a latent plan from the first probability distribution;
for each observation action pair in the sequence, processing (408) an input comprising the observation in the pair, the last observation in the sequence, and the latent plan using the policy neural network (120) and in accordance with current values of policy parameters to generate an action probability distribution for the pair; and
determining (410) a gradient with respect to the policy parameters, the plan recognizer parameters, and the plan proposal parameters of a loss function that includes (i) a first term that depends on, for each observation action pair, a probability assigned to the action in the observation action pair in the action probability distribution for the observation action pair and (ii) a second term that measures a difference between the first probability distribution and the second probability distribution; and
wherein the plan proposal neural network (110) and the policy neural network (120) are configured to control a mechanical agent interacting with a real-world environment to perform a task and, during operation, reuse of a selected latent plan is performed if criteria for selecting a new latent plan are not satisfied, wherein the criteria comprises: a criteria based on selecting a new latent plan for every n-th observation, where n > 1; or a criteria based on selecting a new latent plan every k milliseconds while the agent is performing the task.

8. The method of claim 7, wherein at least one of: the second term is a KL divergence between the first probability distribution and the second probability distribution; and
the first term is a maximum likelihood loss term.

9. The method of claims 7 or 8, wherein the loss function is of the form L1 + BL2, where L1 is the first term, L2 is the second term, and B is a constant weight value; and optionally, B is less than 1.

10. The method of any one of claims 7-9, wherein the plan recognizer neural network (310) is a recurrent neural network; or
wherein the plan recognizer neural network (310) is a bi-directional recurrent neural network.

11. One or more computer-readable storage media storing instructions that when executed by one or more computers cause the one or more computers to perform the respective operations of any one of the methods of any of the preceding claims.

12. A system comprising one or more computers and one or more storage devices storing instructions that when executed by one or more computers cause the one or more computers to perform the respective operations of any one of the methods of any one of claims 1 to 10.

13. A computer program comprising instructions, which when executed by one or more computers, causes the one or more computers to implement the method of any one of claims 1 to 10.

## Patentansprüche

1. Computerimplementiertes Verfahren zum Steuern eines Agenten, der mit einer Umgebung interagiert, um eine Aufgabe durchzuführen, wobei das Verfahren Folgendes umfasst:
Empfangen (202) einer aktuellen Beobachtung (102), die einen aktuellen Zustand der Umgebung charakterisiert;
Empfangen (204) einer Zielbeobachtung (104), die einen Zielzustand der Umgebung charakterisiert, der dazu führt, dass der Agent die Aufgabe erfolgreich durchführt;
Verarbeiten (206) der aktuellen Beobachtung (102) und der Zielbeobachtung (104) unter Verwendung eines trainierten neuronalen Planvorschlagsnetzwerks (110), das eine Mehrzahl von Planvorschlagsparametern aufweist und konfiguriert ist, um Daten zu erzeugen, die eine Wahrscheinlichkeitsverteilung (112) über einen Raum von latenten Plänen (114) definieren;
Auswählen (208), unter Verwendung der Wahrscheinlichkeitsverteilung (112), eines latenten Plans aus dem Raum von latenten Plänen (114);
Verarbeiten (210) einer Richtlinieneingabe, die (i) die aktuelle Beobachtung (102), (ii) die Zielbeobachtung (104) und (iii) den ausgewählten latenten Plan umfasst, unter Verwendung eines trainierten neuronalen Richtliniennetzwerks (120), das eine Mehrzahl von Richtlinienparametern aufweist und konfiguriert ist, um eine aktuelle Aktionsausgabe zu erzeugen, die eine Aktion (124) definiert, die als Reaktion auf die aktuelle Beobachtung (102) durchzuführen ist;
Veranlassen (212) des Agenten, die Aktion (124) durchzuführen, die durch die aktuelle Aktionsausgabe definiert wird;
Empfangen einer nachfolgenden Beobachtung, die einen nachfolgenden Zustand der Umgebung charakterisiert, der auf den aktuellen Zustand folgt;
Bestimmen, ob Kriterien für das Auswählen eines neuen latenten Plans nicht erfüllt sind, wenn die nachfolgende Beobachtung empfangen wird;
als Reaktion auf das Bestimmen, dass die Kriterien für das Auswählen eines neuen latenten Plans nicht erfüllt sind,
Durchführen von Folgendem:
Verarbeiten der Richtlinieneingabe, die (i) die nachfolgende Beobachtung, (ii) die Zielbeobachtung (104) und (iii) den ausgewählten latenten Plan umfasst, unter Verwendung des neuronalen Richtliniennetzwerks (120), um eine nachfolgende Aktionsausgabe zu erzeugen, die eine Aktion definiert, die als Reaktion auf die nachfolgende Beobachtung durchzuführen ist; und Veranlassen des Agenten, die Aktion durchzuführen, die durch die nachfolgende Aktionsausgabe definiert wird; und
wobei die Umgebung eine reale Umgebung ist und der Agent ein mechanischer Agent ist, der mit der realen Umgebung interagiert; und,
wobei die Kriterien Folgendes umfassen:
ein Kriterium, das auf dem Auswählen eines neuen latenten Plans für jede n-te Beobachtung basiert, wobei n > 1; oder
ein Kriterium, das auf dem Auswählen eines neuen latenten Plans alle k Millisekunden basiert, während der Agent die Aufgabe durchführt.

2. Verfahren nach einem der vorhergehenden Ansprüche, wobei das Auswählen, unter Verwendung der Wahrscheinlichkeitsverteilung (112), eines latenten Plans aus dem Raum von latenten Plänen (114), ein Abtasten eines latenten Plans in Übereinstimmung mit der Wahrscheinlichkeitsverteilung (112) umfasst; und/oder optional, wobei die Daten, die die Wahrscheinlichkeitsverteilung (112) über den Raum von latenten Plänen (114) definieren, ein Mittelwert und eine Varianz einer multivariaten Verteilung sind.

3. Verfahren nach einem der vorhergehenden Ansprüche, wobei die aktuelle Aktionsausgabe eine Wahrscheinlichkeitsverteilung über einen Satz von Aktionen definiert, die durch den Agenten durchgeführt werden können.

4. Verfahren nach einem der vorhergehenden Ansprüche, wobei das neuronale Planvorschlagsnetzwerk (110) und das neuronale Richtliniennetzwerk (120) gemeinsam durch selbstüberwachtes Lernen trainiert worden sind.

5. Verfahren nach einem der vorhergehenden Ansprüche, wobei mindestens eines von Folgendem gilt:
das neuronale Planvorschlagsnetzwerk (110) ist ein neuronales Feed-Forward-Netzwerk; oder
das neuronale Planvorschlagsnetzwerk (110) beinhaltet ein mehrschichtiges Perzeptron (MLP).

6. Verfahren nach einem der vorhergehenden Ansprüche, wobei das neuronale Richtliniennetzwerk (120) ein rekurrentes neuronales Netzwerk ist.

7. Computerimplementiertes Verfahren zum Trainieren eines neuronalen Planvorschlagsnetzwerks (110), das eine Mehrzahl von Planvorschlagsparametern aufweist, und eines neuronalen Richtliniennetzwerks (120), das eine Mehrzahl von Richtlinienparametern aufweist, gemeinsam mit einem neuronalen Planerkennungsnetzwerk (310), das eine Mehrzahl von Planerkennungsparametern aufweist und konfiguriert ist, um als Eingabe eine Sequenz von Beobachtungs-Aktions-Paaren (304) zu empfangen und die Sequenz von Zustands-Aktions-Paaren (304) zu verarbeiten, um Daten zu erzeugen, die eine Wahrscheinlichkeitsverteilung über einen Raum von latenten Plänen (114) definieren, wobei das Verfahren Folgendes umfasst:
Erhalten (402) einer Sequenz von Beobachtungs-Aktions-Paaren, wobei die Sequenz von Beobachtungs-Aktions-Paaren als ein Ergebnis von Interaktionen des Agenten mit der Umgebung erzeugt wird;
Verarbeiten (404) zumindest der Beobachtungen in der Sequenz von Beobachtungs-Aktions-Paaren unter Verwendung des neuronalen Planerkennungsnetzwerks (310) und in Übereinstimmung mit aktuellen Werten der Mehrzahl von Planerkennungsparametern, um erste Daten zu erzeugen, die eine erste Wahrscheinlichkeitsverteilung über den Raum von latenten Plänen (114) definieren;
Verarbeiten der ersten Beobachtung in der Sequenz und der letzten Beobachtung in der Sequenz unter Verwendung des neuronalen Planvorschlagsnetzwerks (110) und in Übereinstimmung mit aktuellen Werten der Planvorschlagsparameter, um eine zweite Wahrscheinlichkeitsverteilung über den Raum von latenten Plänen (114) zu erzeugen;
Abtasten (406) eines latenten Plans aus der ersten Wahrscheinlichkeitsverteilung;
für jedes Beobachtungs-Aktions-Paar in der Sequenz, Verarbeiten (408) einer Eingabe, die die Beobachtung in dem Paar, die letzte Beobachtung in der Sequenz und den latenten Plan umfasst, unter Verwendung des neuronalen Richtliniennetzwerks (120) und in Übereinstimmung mit aktuellen Werten von Richtlinienparametern, um eine Aktionswahrscheinlichkeitsverteilung für das Paar zu erzeugen; und
Bestimmen (410) eines Gradienten in Bezug auf die Richtlinienparameter, die Planerkennungsparameter und die Planvorschlagsparameter einer Verlustfunktion, die (i) einen ersten Term, der, für jedes Beobachtungs-Aktions-Paar, von einer Wahrscheinlichkeit abhängt, die der Aktion in dem Beobachtungs-Aktions-Paar in der Aktionswahrscheinlichkeitsverteilung für das Beobachtungs-Aktions-Paar zugewiesen ist, und (ii) einen zweiten Term beinhaltet, der eine Differenz zwischen der ersten Wahrscheinlichkeitsverteilung und der zweiten Wahrscheinlichkeitsverteilung misst; und
wobei das neuronale Planvorschlagsnetzwerk (110) und das neuronale Richtliniennetzwerk (120) konfiguriert sind, um einen mechanischen Agenten zu steuern, der mit einer realen Umgebung interagiert, um eine Aufgabe durchzuführen, und, während eines Betriebs, eine Wiederverwendung eines ausgewählten latenten Plans durchgeführt wird, wenn Kriterien für das Auswählen eines neuen latenten Plans nicht erfüllt sind, wobei die Kriterien umfassen: ein Kriterium, das auf dem Auswählen eines neuen latenten Plans für jede n-te Beobachtung basiert, wobei n > 1;
oder ein Kriterium, das auf dem Auswählen eines neuen latenten Plans alle k Millisekunden basiert, während der Agent die Aufgabe durchführt.

8. Verfahren nach Anspruch 7, wobei mindestens eines von Folgendem gilt: der zweite Term ist eine KL-Divergenz zwischen der ersten Wahrscheinlichkeitsverteilung und der zweiten Wahrscheinlichkeitsverteilung; und
der erste Term ist ein Maximum-Likelihood-Verlust-Term.

9. Verfahren nach Anspruch 7 oder 8, wobei die Verlustfunktion die Form L1 + BL2 aufweist, wobei L1 der erste Term ist, L2 der zweite Term ist und B ein konstanter Gewichtungswert ist; und optional, B kleiner als 1 ist.

10. Verfahren nach einem der Ansprüche 7-9, wobei das neuronale Planerkennungsnetzwerk (310) ein rekurrentes neuronales Netzwerk ist; oder
wobei das neuronale Planerkennungsnetzwerk (310) ein bidirektionales rekurrentes neuronales Netzwerk ist.

11. Ein oder mehrere computerlesbare Speichermedien, auf denen Anweisungen gespeichert sind, die, wenn sie durch einen oder mehrere Computer ausgeführt werden, den einen oder die mehreren Computer veranlassen, die jeweiligen Operationen nach einem der Verfahren nach einem der vorhergehenden Ansprüche durchzuführen.

12. System, umfassend einen oder mehrere Computer und eine oder mehrere Speichervorrichtungen, auf denen Anweisungen gespeichert sind, die, wenn sie durch einen oder mehrere Computer ausgeführt werden, den einen oder die mehreren Computer veranlassen, die jeweiligen Operationen nach einem der Verfahren nach einem der Ansprüche 1 bis 10 durchzuführen.

13. Computerprogramm, umfassend Anweisungen, die, wenn sie durch einen oder mehrere Computer ausgeführt werden, den einen oder die mehreren Computer veranlassen, das Verfahren nach einem der Ansprüche 1 bis 10 zu implementieren.

## Revendications

1. Procédé mis en œuvre par ordinateur de commande d'un agent interagissant avec un environnement pour réaliser une tâche, le procédé comprenant :
la réception (202) d'une observation actuelle (102) caractérisant un état actuel de l'environnement ;
la réception (204) d'une observation d'objectif (104) caractérisant un état d'objectif de l'environnement qui permet à l'agent de réaliser avec succès la tâche ;
le traitement (206) de l'observation actuelle (102) et de l'observation d'objectif (104) à l'aide d'un réseau neuronal de proposition de plan entraîné (110) ayant une pluralité de paramètres de proposition de plan et configuré pour générer des données définissant une distribution de probabilité (112) sur un espace de plans latents (114) ;
la sélection (208), à l'aide de la distribution de probabilité (112), d'un plan latent à partir de l'espace de plans latents (114) ;
le traitement (210) d'une entrée de politique comprenant (i) l'observation actuelle (102), (ii) l'observation d'objectif (104) et (iii) le plan latent sélectionné à l'aide d'un réseau neuronal de politique entraîné (120) ayant une pluralité de paramètres de politique et configuré pour générer une sortie d'action actuelle qui définit une action (124) à réaliser en réponse à l'observation actuelle (102) ;
le fait d'amener (212) l'agent à réaliser l'action (124) définie par la sortie d'action actuelle ;
la réception d'une observation ultérieure caractérisant un état ultérieur de l'environnement qui succède à l'état actuel ;
le fait de déterminer si les critères de sélection d'un nouveau plan latent ne sont pas satisfaits lors de la réception de l'observation ultérieure ;
en réponse à la détermination que les critères de sélection d'un nouveau plan latent ne sont pas satisfaits, le fait de réaliser :
le traitement de l'entrée de politique comprenant (i) l'observation ultérieure, (ii) l'observation d'objectif (104) et (iii) le plan latent sélectionné à l'aide du réseau neuronal de politique (120) pour générer une sortie d'action ultérieure qui définit une action à réaliser en réponse à l'observation ultérieure ; et
le fait d'amener l'agent à réaliser l'action définie par la sortie d'action ultérieure ; et
dans lequel l'environnement est un environnement du monde réel et l'agent est un agent mécanique interagissant avec l'environnement du monde réel ; et,
dans lequel les critères comprennent :
un critère basé sur la sélection d'un nouveau plan latent pour chaque n-ième observation, où n > 1 ; ou
un critère basé sur la sélection d'un nouveau plan latent toutes les k millisecondes pendant que l'agent réalise la tâche.

2. Procédé selon une quelconque revendication précédente, dans lequel la sélection, à l'aide de la distribution de probabilité (112), d'un plan latent à partir de l'espace de plans latents (114), comprend l'échantillonnage d'un plan latent conformément à la distribution de probabilité (112) ; et/ou éventuellement, dans lequel les données définissant la distribution de probabilité (112) sur l'espace de plans latents (114) sont une moyenne et une variance d'une distribution multivariée.

3. Procédé selon une quelconque revendication précédente, dans lequel la sortie d'action actuelle définit une distribution de probabilité sur un ensemble d'actions pouvant être réalisées par l'agent.

4. Procédé selon une quelconque revendication précédente, dans lequel le réseau neuronal de proposition de plan (110) et le réseau neuronal de politique (120) ont été entraînés conjointement par apprentissage auto-supervisé.

5. Procédé selon une quelconque revendication précédente, dans lequel au moins l'un des éléments suivants :
le réseau neuronal de proposition de plan (110) est un réseau neuronal à propagation directe ; ou
le réseau neuronal de proposition de plan (110) comporte un perceptron multicouche (MLP).

6. Procédé selon une quelconque revendication précédente, dans lequel le réseau neuronal de politique (120) est un réseau neuronal récurrent.

7. Procédé mis en œuvre par ordinateur d'entraînement d'un réseau neuronal de proposition de plan (110) ayant une pluralité de paramètres de proposition de plan et un réseau neuronal de politique (120) ayant une pluralité de paramètres de politique, conjointement avec un réseau neuronal de reconnaissance de plan (310) ayant une pluralité de paramètres de reconnaissance de plan et configuré pour recevoir en entrée une séquence de paires observation-action (304) et pour traiter la séquence de paires état-action (304) afin de générer des données définissant une distribution de probabilité sur un espace de plans latents (114), le procédé comprenant :
l'obtention (402) d'une séquence de paires observation-action,
la séquence de paires observation-action étant générée à la suite des interactions de l'agent avec l'environnement ;
le traitement (404) d'au moins les observations dans la séquence de paires observation-action à l'aide du réseau neuronal de reconnaissance de plan (310) et conformément aux valeurs actuelles de la pluralité de paramètres de reconnaissance de plan pour générer des premières données définissant une première distribution de probabilité sur l'espace de plans latents (114) ;
le traitement de la première observation de la séquence et de la dernière observation de la séquence à l'aide du réseau neuronal de proposition de plan (110) et conformément aux valeurs actuelles des paramètres de proposition de plan pour générer une seconde distribution de probabilité sur l'espace de plans latents (114) ;
l'échantillonnage (406) d'un plan latent à partir de la première distribution de probabilité ;
pour chaque paire observation-action de la séquence, le traitement (408) d'une entrée comprenant l'observation de la paire, la dernière observation de la séquence et le plan latent à l'aide du réseau neuronal de politique (120) et conformément aux valeurs actuelles des paramètres de politique pour générer une distribution de probabilité d'action pour la paire ; et
la détermination (410) d'un gradient par rapport aux paramètres de politique, aux paramètres de reconnaissance de plan et aux paramètres de proposition de plan d'une fonction de perte qui comporte (i) un premier terme qui dépend, pour chaque paire observation-action, d'une probabilité attribuée à l'action dans la paire observation-action dans la distribution de probabilité d'action pour la paire observation-action et (ii) un second terme qui mesure une différence entre la première distribution de probabilité et la seconde distribution de probabilité ; et
dans lequel le réseau neuronal de proposition de plan (110) et le réseau neuronal de politique (120) sont configurés pour commander un agent mécanique interagissant avec un environnement du monde réel afin de réaliser une tâche et, pendant le fonctionnement, la réutilisation d'un plan latent sélectionné est réalisée si les critères de sélection d'un nouveau plan latent ne sont pas satisfaits, dans lequel les critères comprennent : un critère basé sur la sélection d'un nouveau plan latent pour chaque n-ième observation, où n > 1 ; ou un critère basé sur la sélection d'un nouveau plan latent toutes les k millisecondes pendant que l'agent réalise la tâche.

8. Procédé selon la revendication 7, dans lequel au moins l'un des éléments suivants : le second terme est une divergence KL entre la première distribution de probabilité et la seconde distribution de probabilité ; et
le premier terme est un terme de perte de vraisemblance maximum.

9. Procédé selon les revendications 7 ou 8, dans lequel la fonction de perte est de la forme L1 + BL2, où L1 est le premier terme, L2 est le second terme et B est une valeur de pondération constante ; et éventuellement, B est inférieur à 1.

10. Procédé selon l'une quelconque des revendications 7 à 9, dans lequel le réseau neuronal de reconnaissance de plan (310) est un réseau neuronal récurrent ; ou
dans lequel le réseau neuronal de reconnaissance de plan (310) est un réseau neuronal récurrent bidirectionnel.

11. Un ou plusieurs supports de stockage lisibles par ordinateur stockant des instructions qui, lorsqu'elles sont exécutées par un ou plusieurs ordinateurs, amènent les un ou plusieurs ordinateurs à réaliser les opérations respectives de l'un quelconque des procédés selon l'une quelconque des revendications précédentes.

12. Système comprenant un ou plusieurs ordinateurs et un ou plusieurs dispositifs de stockage stockant des instructions qui, lorsqu'elles sont exécutées par un ou plusieurs ordinateurs, amènent les un ou plusieurs ordinateurs à réaliser les opérations respectives de l'un quelconque des procédés selon l'une quelconque des revendications 1 à 10.

13. Programme informatique comprenant des instructions qui, lorsqu'elles sont exécutées par un ou plusieurs ordinateurs, amènent les un ou plusieurs ordinateurs à mettre en œuvre le procédé selon l'une quelconque des revendications 1 à 10.
